Europäisches Patentamt

European Patent Office

Office européen des brevets

(11) Veröffentlichungsnummer: **0 119 602**
A1

# EUROPÄISCHE PATENTANMELDUNG

(21) Anmeldenummer: **84102869.9**

(51) Int. Cl.³: **H 04 M 1/02**, H 04 M 1/72

(22) Anmeldetag: **15.03.84**

(30) Priorität: **18.03.83 DE 3309877**

(43) Veröffentlichungstag der Anmeldung: **26.09.84**
**Patentblatt 84/39**

(84) Benannte Vertragsstaaten: **AT CH DE LI NL**

(71) Anmelder: **Siemens Aktiengesellschaft, Berlin und München Wittelsbacherplatz 2, D-8000 München 2 (DE)**

(72) Erfinder: **Schön, Siegfried, Tulpenweg 10, D-8130 Starnberg (DE)**

(54) **Aufnahme für schnurloses Telefon.**

(57) Die Erfindung bezieht sich auf eine ortsfest angeordnete Station zur Aufnahme eines schnurlosen Telefons. Aufgabe der Erfindung ist es, eine derartige ortsfeste Station so auszubilden, daß diese eine sichere Aufbewahrung des schnurlosen Telefons ermöglicht. Gelöst wird die Aufgabe durch eine wannenartige, der Form des schnurlosen Telefons entsprechende Ausnehmung (2). (Abb.)

EP 0 119 602 A1

SIEMENS AKTIENGESELLSCHAFT    Unser Zeichen 0119602

Berlin und München           VPA 83 P 1158 E

— 1 —

Aufnahme für schnurloses Telefon

Die Erfindung betrifft eine ortsfest angeordnete Station zur Aufnahme eines schnurlosen Telefons.

Die ortsfesten Stationen bilden das Verbindungsglied zu einem Telefonnetz und sorgen für einen Aufbewahrungsort für das schnurlose Telefon.

Aufgabe der Erfindung ist es, derartig ortsfeste Stationen so auszubilden, daß diese eine sichere Aufbewahrung des schnurlosen Telefons ermöglichen.

Gelöst wird die Aufgabe dadurch, daß die Station eine wannenartige, der Form des schnurlosen Telefons entsprechende Ausnehmung aufweist.

Das schnurlose Telefon kann damit problemlos in die wannenförmige Aufnahme eingelegt werden.

Aus optischen Gründen kann es zweckmäßig sein, daß die Wanne eine derartige Tiefe aufweist, daß das schnurlose Telefon die Oberfläche der Station nur geringfügig überragt.

Weiterhin kann es vorteilhaft sein, daß die Wanne im der Bedienungsperson zugewandten Bereich abgeschrägt vertieft ausgebildet ist.

Legt man das Telefon in die Wanne, ist es durch einen Druck im Bereich der Vertiefung auf das Telefon möglich,

GS 1 Hus / 14.03.1983

das Telefon auf einfache Weise aus der Wanne herauszunehmen.

Aus funktionstechnischen Gründen kann es vorteilhaft sein, wenn in der Wanne ein Lautsprecher, ein Mikrofon sowie Bedienungstasten angeordnet sind.

Der Lautsprecher wie auch das Mikrofon ermöglichen ein Freisprechen zu einem schnurlosem Telefon. Die Tasten können für einen Internruf Verwendung finden.

Es kann zweckmäßig sein, daß im vorderen Bereich der Station eine optische Anzeigevorrichtung, insbesondere ein Display angeordnet ist. Dieses Display kann z.B. einen Aufschluß über den Ladezustand des schnurlosen Telefons geben.

Zur Herstellung der Verbindung mit dem schnurlosen Telefon ist es zweckmäßig, daß die Station mit einer versenkbaren Antenne versehen ist.

Um die Nachladung des schnurlosen Telefons zu ermöglichen, ist es zweckmäßig, daß die Wanne Kontaktstellen aufweist, durch die bei eingelegtem schnurlosen Telefon der Kontakt zu den Ladekontakten des schnurlosen Telefons herstellbar ist.

Zur sicheren Kontaktgabe zwischen ortsfester Station und schnurlosem Telefon ist es vorteilhaft, daß die Kontaktstellen federnd ausgebildet sind.

Im folgenden sei die Erfindung anhand einer Abbildung näher erläutert.

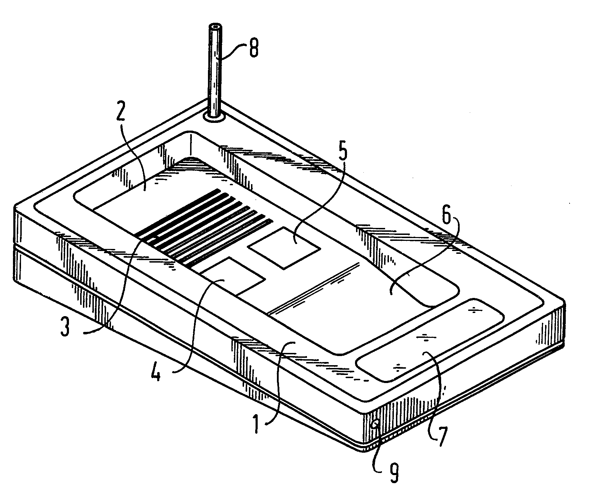

Die Abbildung zeigt eine ortsfest angeordnete Station zur Aufnahme eines schnurlosen Telefons.

Die Station besteht aus einem Gehäuse 1, das eine wannenförmige Ausnehmung 2 aufweist. Am Boden der Wanne sind die Öffnungsschlitze 3 eines Lautsprechers erkennbar. Weiterhin sind zwei Tasten 4, 5 angedeutet, die für einen Internruf dienen können. Der vordere Bereich 6 der Wanne ist abgesenkt und abgewinkelt ausgebildet. Das in der Wanne liegende Telefon ist durch Niederdrücken im Bereich der Wanne aus der Station entnehmbar, da es um die Tiefe der Absenkung verschwenkt wird. Um z.B. den Ladezustand des schnurlosen Telefons kontrollieren zu können, ist im vorderen Bereich der Wanne ein Display 7 angeordnet. Die Station ist mit einer versenkbaren Antenne 8 sowie einem Mikrofon 9 ausgestattet.

8 Patentansprüche
1 Figur

Patentansprüche

1. Ortsfest angeordnete Station zur Aufnahme eines schnurlosen Telefons, d a d u r c h   g e k e n n - z e i c h n e t , daß die Station eine wannenartige, der Form des schnurlosen Telefons entsprechende Ausnehmung aufweist.

2. Ortsfest angeordnete Station nach Anspruch 1, d a - d u r c h   g e k e n n z e i c h n e t , daß die Wanne (2) eine derartige Tiefe aufweist, daß das schnurlose Telefon die Oberfläche der Station nur geringfügig überragt.

3. Ortsfest angeordnete Station nach Anspruch 1, d a - d u r c h   g e k e n n z e i c h n e t , daß die Wanne (2) im der Bedienungsperson zugewandten Bereich (6) abgeschrägt vertieft ausgebildet ist.

4. Ortsfest angeordnete Station nach Anspruch 1, d a - d u r c h   g e k e n n z e i c h n e t , daß in der Wanne ein Lautsprecher (3), ein Mikrofon (9) sowie Bedienungstasten (4, 5) angeordnet sind.

5. Ortsfest angeordnete Station nach Anspruch 1, d a - d u r c h   g e k e n n z e i c h n e t , daß im vor- deren Bereich der Station eine optische Anzeigevorrichtung (7), insbesondere ein Display angeordnet ist.

6. Ortsfest angeordnete Station nach Anspruch 1, d a - d u r c h   g e k e n n z e i c h n e t , daß die Station mit einer versenkbaren Antenne (8) versehen ist.

7. Ortsfest angeordnete Station nach Anspruch 1, d a - d u r c h   g e k e n n z e i c h n e t , daß die Wanne

0119602

Kontaktstellen aufweist, durch die bei eingelegtem schnurlosen Telefon der Kontakt zu den Ladekontaken des schnurlosen Telefons herstellbar ist.

8. Ortsfest angeordnete Station nach Anspruch 7, d a - d u r c h   g e k e n n z e i c h n e t , daß die Kontaktstellen federnd ausgebildet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 930 532 (SEL)<br>* Seite 6, Zeile 23 - Seite 9, Zeile 12; Figuren * | 1,7,8 | H 04 M 1/02<br>H 04 M 1/72 |
| | --- | | |
| P,A | US-A-4 395 591 (KACZKOS)<br>* Spalte 2, Zeile 56 - Spalte 4, Zeile 2; Figuren * | 1,2 | |
| | --- | | |
| A | DE-A-2 508 102 (SIEMENS)<br>* Seite 6, Zeile 6 - Seite 7, Zeile 12; Figuren * | 7,8 | |
| | ----- | | |

**RECHERCHIERTE SACHGEBIETE (Int. Cl. ³)**

H 04 M

Der vorliegende Recherchenbericht wurde für alle Patentansprüche erstellt.

| Recherchenort | Abschlußdatum der Recherche | Prüfer |
|---|---|---|
| DEN HAAG | 15-06-1984 | KEPPENS P.M.R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82